(19) Europäisches Patentamt / European Patent Office / Office européen des brevets

(11) **EP 3 487 093 B1**

(12) **EUROPEAN PATENT SPECIFICATION**

(45) Date of publication and mention
of the grant of the patent:
**09.02.2022 Bulletin 2022/06**

(21) Application number: **18210171.7**

(22) Date of filing: **12.10.2011**

(51) International Patent Classification (IPC):
*H04J 11/00* (2006.01)     *H04B 7/26* (2006.01)
*H04W 24/10* (2009.01)     *H04W 52/00* (2009.01)
*H04W 52/36* (2009.01)

(52) Cooperative Patent Classification (CPC):
**H04W 52/365; H04W 52/367;** H04L 5/001;
H04W 52/146; H04W 52/34

(54) **METHOD AND APPARATUS FOR DETERMINING MAXIMUM TRANSMISSION POWER PER CARRIER IN MOBILE COMMUNICATION SYSTEM SUPPORTING CARRIER AGGREGATION**

VERFAHREN UND VORRICHTUNG ZUR BESTIMMUNG EINER MAXIMALEN ÜBERTRAGUNGSLEISTUNG FÜR JEDEN TRÄGER IN EINEM MOBILKOMMUNIKATIONSSYSTEM MIT TRÄGERAGGREGATION

PROCÉDÉ ET APPAREIL DE DÉTERMINATION DE LA PUISSANCE DE TRANSMISSION MAXIMALE PAR PORTEUSE DANS UN SYSTÈME DE COMMUNICATION MOBILE PRENANT EN CHARGE UNE AGRÉGATION DE PORTEUSES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.09.2011 KR 20110097409**
**06.11.2010 US 41049310 P**
**12.10.2010 US 39243610 P**

(43) Date of publication of application:
**22.05.2019 Bulletin 2019/21**

(62) Document number(s) of the earlier application(s) in accordance with Art. 76 EPC:
**11832741.0 / 2 628 342**

(73) Proprietor: **Samsung Electronics Co., Ltd.**
**Suwon-si, Gyeonggi-do 443-742 (KR)**

(72) Inventors:
• **KIM, Soeng Hun**
**446-908 Yongin-si Gyeonggi-do (KR)**
• **KIM, Sang Bum**
**140-220 Seoul (KR)**
• **JEONG, Kyeong In**
**443-372 Suwon-si Gyeonggi-do (KR)**
• **VAN LIESHOUT, Gert-Jan**
**NL-7314 CG Apeldoorn (NL)**

(74) Representative: **Grünecker Patent- und Rechtsanwälte PartG mbB Leopoldstraße 4 80802 München (DE)**

(56) References cited:
• **PANASONIC: "UE-specific Power headroom report", 3GPP DRAFT; R2-103602, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Stockholm, Sweden; 20100628, 22 June 2010 (2010-06-22), XP050451149,**
• **RESEARCH IN MOTION ET AL: "Discussion on Per UE PHR", 3GPP DRAFT; R1-104917 (RIM-PERUEPHR), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Madrid, Spain; 20100823, 17 August 2010 (2010-08-17), XP050450063,**

- POTEVIO: "Remaining Issues on PHR for CA", 3GPP DRAFT; R2-102770 REMAINING ISSUES ON PHR FOR CA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Montreal, Canada; 20100510, 1 May 2010 (2010-05-01), XP050422890,
- ZTE: "Parallel transmission of two types PHR", 3GPP DRAFT; R2-103725 PARALLEL TRANSMISSION OF TYPE1 2 PHR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Stockholm, Sweden; 20100628, 22 June 2010 (2010-06-22), XP050451200,
- NOKIA SIEMENS NETWORKS ET AL: "Further consideration on virtual PHR", 3GPP DRAFT; R2-104394 FURTHER CONSIDERATION ON VIRTUAL PHR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Madrid, Spain; 20100823, 17 August 2010 (2010-08-17), XP050451845, [retrieved on 2010-08-17]
- NOKIA: "On LTE CA UE SEM, ACLR and MPR", 3GPP DRAFT; R4-101761, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. Montreal, Canada; 20100510, 20 May 2010 (2010-05-20), XP050426749, [retrieved on 2010-05-20]
- ITRI: "PHR format for CA", 3GPP DRAFT; R2-105818_ PHR FORMAT FOR CA_V3, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Xi'an, China; 20101011 - 201010, 5 October 2010 (2010-10-05), XP050605452, [retrieved on 2010-10-05]
- ALCATEL-LUCENT ET AL: "MAC PHR CE format design for LTE-A CA scenario", 3GPP DRAFT; R2-105651, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Xi'an; 20101011, 4 October 2010 (2010-10-04), XP050452549, [retrieved on 2010-10-04]

## Description

### Technical Field

The present invention relates to a method and apparatus for determining a maximum transmission power per carrier in a mobile communication system supporting carrier aggregation.

### Background Art

Mobile communication systems have been developed to provide users with mobile voice and data communication services. With the rapid advance of technologies, the mobile communication systems have evolved to support high speed data communication services as well as the standard voice communication services.

Recently, as the next generation mobile communication system of the 3rd Generation Partnership Project (3GPP), Long Term Evolution (LTE) is under development. LTE technology allows for high-speed packet-based communication at about 100 Mbps, and was introduced to commercial markets around 2010. Regarding the commercialization of the LTE system, a discussion is being held on several schemes of the LTE system: one scheme for reducing a number of nodes located in a communication path by simplifying a configuration of the network, and another scheme for maximally approximating wireless protocols to wireless channels.

Unlike voice service, data service is characterized by network resources being allocated according to the data amount to be transmitted and channel condition. Accordingly, in the wireless communication system such as cellular communication system, a scheduler manages resource allocation in consideration of the resource amount, channel condition, and data amount. This is also the case in the LTE system such that the scheduler located in the base station manages and allocates the radio resource.

Recently, LTE-Advanced (LTE-A) is actively researched as an evolution of the LTE system so as to incorporate new techniques to increase data rate throughput. Carrier aggregation is one of the representative techniques that are newly adopted in LTE-A. Unlike data communication in which a User Equipment (UE) uses a single uplink carrier and a single downlink carrier, carrier aggregation enables the UE to use multiple uplink and/or downlink carriers. In "Further consideration on virtual PHR" (Nokia Siemens Networks, Nokia Corporation, R2-104394,3GPP TSG-RAN WG2 Meeting #71, 2010), the sending of virtual PHR even if there is no PUCCH or PUSCH transmission is considered. The simplest way might be to define Pcmax = Ppowerciass assuming 0 for all parameters for virtual PHR, and for real PHR with actual PUCCH/PUSCH transmission, it should be calculated according to actual transmission.

### Disclosure of Invention

### Technical Problem

Since the conventional uplink transmission power determination algorithm is designed for the UE operating with one uplink carrier and one downlink carrier, it is difficult to apply the conventional transmission power determination process for uplink transmission power determination of the UE supporting carrier aggregation. Particularly, there is a need to define a procedure and method for reporting Power Headroom (PH) of the UE supporting carrier aggregation.

### Solution to Problem

The invention provides a method of a terminal for reporting power headroom (PH) in a mobile communication system supporting carrier aggregation according to claim 1. The invention further provides a terminal in a mobile communication system supporting carrier aggregation according to claim 5. Preferred embodiments are defined in the dependent claims.

### Advantageous Effects of Invention

According to the present invention, the method and apparatus for determining a maximum transmission power in a mobile communication system supporting carrier aggregation is advantageous to determine the maximum transmission power per carrier more efficiently. As a consequence, the per-carrier maximum transmission power determination method and apparatus of the present invention is capable of controlling uplink transmission power efficiently in the mobile communication system.

**Brief Description of Drawings**

The above and other aspects, features, and advantages of certain exemplary embodiments of the present invention will be more apparent from the following description taken in conjunction with the accompanying drawings, in which:

FIG. 1 is a diagram illustrating the architecture of a mobile communication system according to an exemplary embodiment of the present invention;
FIG. 2 is a diagram illustrating a protocol stack of the mobile communication system according to an exemplary embodiment of the present invention;
FIG. 3 is a diagram illustrating an exemplary situation of carrier aggregation in the mobile communication system according to an exemplary embodiment of the present invention;
FIG. 4 is a conceptual diagram illustrating a principle of carrier aggregation for use in the mobile communication according to an exemplary embodiment of the present invention;
FIG. 5 is a diagram illustrating a scenario of Power Headroom (PH) reporting according to an exemplary embodiment of the present invention;
FIG. 6 is a flowchart illustrating a procedure for configuring PH of the UE according to an exemplary embodiment of the present invention; and
FIG. 7 is a block diagram illustrating a configuration of a PH reporting apparatus of the UE according to an exemplary embodiment of the present invention.

Throughout the drawings, it should be noted that like reference numbers are used to depict the same or similar elements, features, and structures.

**Mode for the Invention**

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

The present invention relates to a method and apparatus for a UE to report Power Headroom (PH) information per carrier in a mobile communication system supporting carrier aggregation.

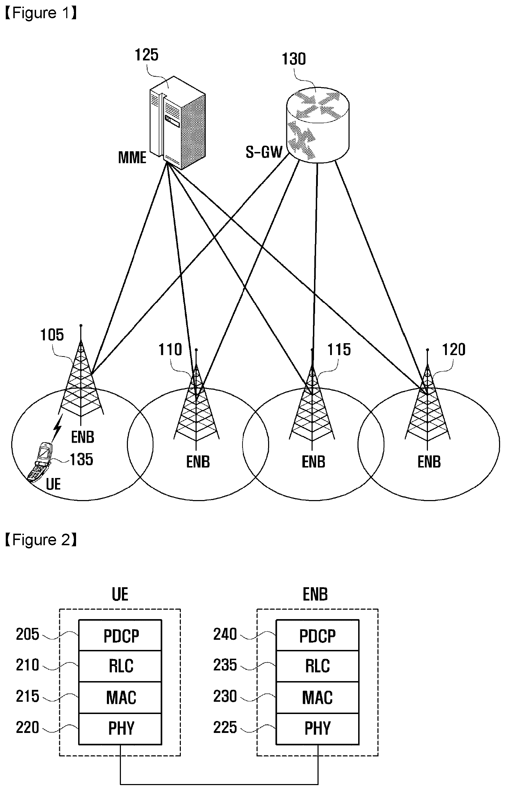

Prior to explaining exemplary embodiments of the present invention, a description is made of the mobile communication system to which the present invention is applied with reference to FIGs. 1, 2, and 3. In the following, the description is directed to the case of LTE system.

FIG. 1 is a diagram illustrating the architecture of a mobile communication system according to an exemplary embodiment of the present invention.

Referring to FIG. 1, the radio access network of the mobile communication system includes evolved Node Bs (eNBs) 105, 110, 115, and 120, a Mobility Management Entity (MME) 125, and a Serving-Gateway (S-GW) 130. The User Equipment (hereinafter, referred to as UE) 135 connects to an external network via eNBs 105, 110, 115, and 120 and the S-GW 130.

The eNBs 105, 110, 115, and 120 correspond to legacy node Bs of Universal Mobile Telecommunications System (UMTS). The eNBs 105, 110, 115, and 120 allow the UE establish a radio link and are responsible for more complicated functions as compared to the legacy node B. In the LTE system, all the user traffic, including real time services such as Voice over Internet Protocol (VoIP), are provided through a shared channel and thus there is a need for a device which is located in the eNB to schedule data transfers based on state information of the UEs. In order to implement the data rate of up to 100Mbps, the LTE system adopts Orthogonal Frequency Division Multiplexing (OFDM) as a radio access technology. Also, the LTE system adopts Adaptive Modulation and Coding (AMC) to determine the modulation scheme and channel coding rate in adaptation to the channel condition of the UE. The S-GW 130 provides data bearers so as to establish and release data bearers under the control of the MME 125. The MME 125 is responsible for various control functions and is connected to a plurality of eNBs 105, 110, 115, and 120.

FIG. 2 is a diagram illustrating a protocol stack of the mobile communication system according to an exemplary embodiment of the present invention.

Referring to FIG. 2, the protocol stack of the LTE system includes a Packet Data Convergence Protocol (PDCP) layer 205 and 240, a Radio Link Control (RLC) layer 210 and 235, a Medium Access Control (MAC) layer 215 and 230, and a Physical (PHY) layer 220 and 225. The PDCP layer 205 and 240 is responsible for IP header compression/decompression. The RLC layer 210 and 235 is responsible for segmenting the PDCP Protocol Data Unit (PDU) into segments of appropriate size for Automatic Repeat Request (ARQ) operations. The MAC layer 215 and 230 is responsible for establishing connection to a plurality of RLC entities so as to multiplex the RLC PDUs into MAC PDUs and demultiplex the MAC PDUs into RLC PDUs. The PHY layer 220 and 225 performs channel coding on the MAC PDU and modulates the MAC PDU into OFDM symbols to be transmitted over a radio channel or performs demodulating and channel-decoding on the received OFDM symbols and delivers the decoded data to a higher layer. With respect to data transmission, the data input to a protocol entity is referred to as Service Data Unit (SDU), and the data output by the protocol entity is referred to as Protocol Data Unit (PDU).

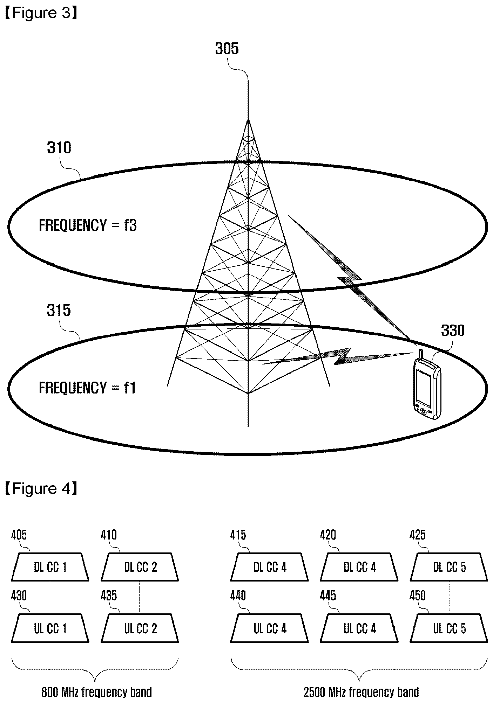

FIG. 3 is a diagram illustrating an exemplary situation of carrier aggregation in the mobile communication system according to an exemplary embodiment of the present invention.

Referring to FIG. 3, typically an eNB can use multiple carriers that transmit and receive data in different frequency bands. For example, the eNB 305 can be configured to use a carrier 315 with center frequency f1 and a carrier 310 with center frequency f3. If carrier aggregation is not supported, a UE 330 has to transmit/receive data using only one of the carriers 310 and 315. However, the UE 330 having the carrier aggregation capability can transmit/receive data using both the carriers 310 and 315. The eNB can increase the amount of the resource to be allocated to the UE 300 having the carrier aggregation capability according to the channel condition of the UE 300 so as to improve the data rate of the UE 300.

In a case that a cell is configured with one downlink carrier and one uplink carrier, the carrier aggregation can be understood as if the UE 300 communicates data via multiple cells. With the use of carrier aggregation, the maximum data rate increases in proportion to the number of aggregated carriers. The aggregated carriers are configured via RRC signaling. In LTE, it is possible to add or remove a carrier to or from the carrier aggregation using a RRC Connection Reconfiguration message. Although a specific carrier is configured via the RRC signaling, data transmission is not performed yet. In order to use a Corresponding Carrier (CC), it is necessary to activate the carrier by MAC signaling. In LTE, the configured carrier is activated by a MAC Control Element (CE) in the MAC PDU. Since the service is provided through the multiple activated carriers, there are multiple serving cells that provide the service through the multiple activated carriers.

Meanwhile, in order to mitigate interference, the uplink transmission power is maintained to be below an appropriate level. For this purpose, the UE, such as the UE 300 of FIG. 3, calculates the uplink transmission power using a predetermined function and performs uplink transmission at the calculated uplink transmission power. For example, the UE calculates the required uplink transmission power value by inputting the input values and performs uplink transmission by applying the calculated uplink transmission power value. The input values may include the scheduling information including a resource amount and a Modulation and Coding Scheme (MCS) allocated to the UE and information necessary for estimating the channel condition such as path loss, among other types of similar input values and information.

The available uplink transmission power value of the UE is limited to a maximum transmission power value of the UE, such that when the calculated transmission power value exceeds the maximum transmission power value, the UE performs the uplink transmission at the maximum transmission power rather than the calculated transmission power value. In this case, the uplink transmission power, which is the maximum transmission power value of the UE, is not enough, resulting in uplink transmission quality degradation. Accordingly, the eNB performs scheduling such that the required transmission power does not exceed the maximum transmission power value of the UE. However, since a few parameters, such as path loss, cannot be checked by the eNB, the UE has to report its Power Headroom (PH) value to the eNB by means of a PH Report (PHR).

There are several factors influencing the power headroom value: 1) an allocated transmission resource amount, 2) a MCS to be applied to uplink transmission, 3) a Path Loss (PL) of the related downlink carrier, and 4) an accumulated transmission power control command value. Among these several factors, the Path Loss and the accumulated transmission power control command value vary according to the uplink carrier such that, when multiple uplink carriers are aggregated, the transmission of PHR is configured per carrier.

However, in order to transmit the PHR efficiently, the PHs of all the uplink carriers are reported using one uplink carrier. Depending on the management policy, it may be necessary to transmit the PH of the carrier on which no Physical Uplink Shared Channel (PUSCH) transmission takes place. In this case, it can be more efficient to report the PHs of the multiple uplink carriers on a single uplink carrier. For this purpose, it is necessary to extend a size of the PHR so as to include the report of all of the PHs of the multiple uplink carriers. The multiple PHs to be contained in the PHR can be arranged in a predetermined order.

FIG. 4 is a conceptual diagram illustrating a principle of carrier aggregation for use in the mobile communication according to an exemplary embodiment of the present invention.

Referring to FIG. 4, five uplink carriers 430, 435, 440 445 and 450, that are shown as UL Component Carriers (CC) 1 through UL CC 5 in FIG. 4, can be aggregated for the UE, and one of the aggregated carriers can be selected to transmit the PHs for all of the 5 uplink carriers. For example, when three uplink carriers 440, 445, and 450, each of which are in a 2500 MHz frequency band, are aggregated for the UE, a PHR can be configured to carry the PHs for the three uplink carriers on the selected one of the aggregated carriers. Furthermore, as shown in FIG. 4, five downlink carriers 405, 410, 415, 420 and 425, that are shows as DL CC 1 through DL CC 5 respectively correspond to the five uplink carriers UL CC 1 through UL CC 5.

The PHR is triggered by anyone of a path loss of the connected downlink carrier is equal to or greater than a predetermined threshold value, a prohibit PHR time expires, and a predetermined time period elapses after the PHR generation. Once the PHR has been triggered, the UE waits until the time available for the uplink transmission arrives, or in other words, the UE waits until the time for when the uplink transmission resource is allocated rather than transmitting the PHR immediately. The UE may wait until this time because the PHR is not sensitive to delay. The UE transmits the PHR at the first uplink transmission. The PHR is MAC layer control information and has a length of 8 bits. The first two bits of the PHR are reserved for future use, and the remaining 6 bits are used to indicate the PH value in a range between -23dB and 40dB as the power headroom of the UE. The UE calculates the PH value using the following Math Figure: MathFigure 1

[Math.1]

$$PH(i) = P_{CMAX,c}(i) - \{10\log_{10}(M_{PUSCH,c}(i)) + P_{O\_PUSCH,c}(j) + \alpha_c(j) \cdot PL_c + \Delta_{TF,c}(i) + f_c(i)\}$$

The PH(i) of the i$^{th}$ subframe in the serving cell c is calculated using the maximum uplink transmission power $P_{CMAX,c}(i)$, the number of resource blocks $M_{PUSCH,c}(i)$, the power offset derived from MCS $\Delta_{TF,c}$, the Path Loss $PL_c$, and the accumulated TPC commands $f_c(i)$. In Math Figure 1, $PL_c$ denotes the path loss of the cell, which provides information on the path loss in the service cell c. The path loss used to determine the uplink transmission power of a certain serving cell is the path loss of the downlink channel of the corresponding cell or the path loss of a downlink channel of another cell. The cell of which the cell's path loss is to be used is selected by the eNB and notified to the UE in the call setup process. In Math Figure 1, $f_c(i)$ is the value of the accumulated Transmission Power Control commands of the serving cell c. $P_{O\_PUSCH,C}$ denotes a higher layer parameter corresponding to a sum of cell-specific and UE-specific values. Typically, $P_{O\_PUSCH,C}$ is set to a value determined according to the transmission scheduling type of PUSCH, such as a semi-persistent scheduling, a dynamic scheduling, and a random access response. $\alpha_c$ denotes 3-bit cell specific value provided from a higher layer and is a weight applied to the path loss when calculating uplink transmission power (i.e., the higher this value is, the more the path loss influences the uplink transmission power), and its value is limited according to the transmission type of the PUSCH. j denotes the transmission type of the PUSCH. The parameter j is set to 0 for the semi-persistent scheduling, is set to 1 for the dynamic scheduling, and is set to 2 for the random access response. If there is no PUSCH transmission, $M_{PUSCH}$ and $\Delta_{TF}$ are not applied to the Math Figure 1.

In the mobile communication system supporting carrier aggregation, there can be a serving cell in which no PUSCH transmission takes place and a serving cell in which PUSCH transmission takes place. Also, the PH for a serving cell can be reported in a serving cell other than the serving cell to which it corresponds. In the mobile communication system supporting carrier aggregation, when it is necessary to report the PHs of multiple serving cells, the UE can transmit the PHs in a single PHR. This method reduces the signaling overhead as compared to the method of transmitting the PHs individually in each of their respective cells, and the eNB can acquire the PH for the carrier on which no PUSCH is transmitted.

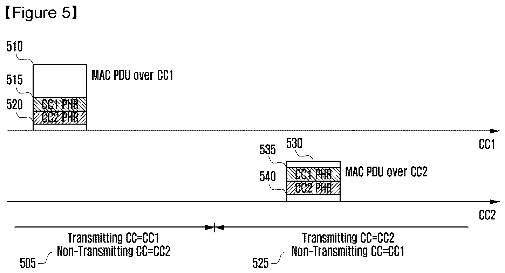

FIG. 5 is a diagram illustrating a scenario of PH reporting according to an exemplary embodiment of the present invention.

Referring to FIG. 5, the diagram shows a scenario in which each of two serving cells CC1 and CC2 transmits the PHs of both the serving cells. In the time duration 505, during which PUSCH transmission takes place in CC1 but not in CC2, the UE can transmit a MAC PDU 510 containing a CC1 PH 515 and a CC2 PH 520. In the time duration 525, during which PUSCH transmission takes place in CC2 but not in CC1, the UE can transmit a MAC PDU 530 containing the a CC1 PH 535 and a CC2 PH 540.

In an exemplary embodiment of the present invention, a method for calculating the UE's maximum uplink transmission power $P_{CMAX,c}$ per carrier depends on whether the PUSCH is transmitted. In a case where the PUSCH is transmitted, the UE determines the maximum uplink transmission power in consideration of all the uplink transmissions in the corresponding Transmission Time Interval (TTI) for the PH calculation. In case where the PUSCH is not transmitted, the UE determines the maximum uplink transmission power without consideration of the uplink transmission of other cells in the corresponding TTI for the PH calculation.

If PHR is triggered in the specific serving cell, the UE determines the method for calculating UE's maximum uplink transmission power $P_{CMAX,c}$ according to whether the PUSCH is transmitted. If the PUSCH is transmitted in the serving cell, the PH is calculated with Math Figure 1 according to a normal technique. At this time, the UE's maximum uplink transmission power $P_{CMAX,c}$ is calculated in consideration of all the uplink transmissions in the corresponding TTI. This is because the uplink transmission of the serving cell may influence the uplink transmissions in other cells unnecessarily. In order to maintain the transmission power below the level that unnecessarily uplink transmissions in the other cells, it is necessary to decrease the uplink transmission power of the serving cell. When all the uplink transmissions in the corresponding TTI are taken into consideration, the amount and position of the radio resources, MCSs, and channel bandwidths of other carriers, and influence of the frequency band are taken into consideration for calculating the UE's maximum uplink transmission power $P_{CMAX,c}$. For example, when calculating the UE's maximum uplink transmission power $P_{CMAX,c}$ of a specific carrier, a specific margin value can be applied to the UE's maximum uplink transmission power calculation process according to whether the carriers scheduled in the same TTI use adjacent frequency bands. The UE's maximum uplink transmission power $P_{CMAX,c}$ is in the following range:
MathFigure 2

[Math.2]

$$P_{CMAX\_L,c} \leq P_{CMAX,c} \leq P_{CMAX\_H,c}$$

If there is no adjacent frequency band for the carriers scheduled simultaneously in the same TTI, $P_{CMAX\_L,c}$ can be adjusted such that the UE's maximum uplink transmission power can be determined as relatively lower value. Here, $P_{CMAX\_L,c}$ can be determined according to a Power Management-Maximum Power Reduction (P-MPR). That is, $P_{CMAX\_L,c}$ can be determined according to the following Math Figure:

MathFigure 3

[Math.3]

$$P_{CMAX\_L,c} = \min\{P_{EMAX,c} - \Delta T_{C,c} - \Delta T_{IB,c}, P_{PowerClass} - \max(MPR_c + A\text{-}MPR_c, P\text{-}MPR_c) - \Delta T_{C,c} - \Delta T_{IB,c}\}$$

where $\Delta T_{IB,c}$ is determined according to whether there is an uplink transmission on other carriers. For example, if there is an uplink transmission on other carriers in the same TTI, $\Delta T_{IB,c}$ can be set to a predetermined value and, otherwise, set to 0 so as to be ignorable in Math Figure 3, and $\Delta T_{C,c}$ denotes a parameter corresponding to band-specific values for reducing $P_{CMAX,c}$.

If there is no PUSCH transmission in the corresponding serving cell, the transmission in the current cell does not influence the transmission in other cells, and thus, there is no need to consider the uplink transmissions in other cells when determining the UE's maximum uplink transmission power $P_{CMAX,c}(i)$. Accordingly, when there is no uplink transmission in the corresponding serving cell, the UE determines the maximum transmission power of the serving cell using the parameters that are not related to the uplink transmissions in other cells. For example, $P_{CMAX,c}(i)$ can be determined using the corresponding cell's allowed maximum transmission power $P_{EMAX}$ and the UE's implicit maximum transmission power $P_{powerclass}$. For example, $P_{CMAX,c}$ can be determined as follows:
MathFigure 4

[Math.4]

$$P_{CMAX,c} = \min\{P_{EMAX}, P_{PowerClass}\}$$

Using Math Figure 4 is the same as saying that a Maximum Power Reduction (MPR), an Additional-MPR (A-MPR), a P-MPR, and a $\Delta T_c$ have the value of 0. $P_{CMAX}$ is determined to be in the range of $P_{CMAX\_L} \leq P_{CMAX} \leq P_{CMAX\_H}$. If all of the MPR, the A-MPR, the P-MPR, and the $\Delta T_c$, have the value of 0, then $P_{CMAX\_L} = P_{CMAX\_H}$ and $P_{CMAX} = P_{CMAX\_H}$. Here, $P_{CMAX\_H}$ is the lowest value selected between $P_{PowerClass}$ and $P_{EMAX}$. $P_{EMAX}$ is a cell-specific maximum allowed transmission power, and $P_{PowerClass}$ is a UE-specific maximum allowed transmission power. If there is no PUSCH transmission in the corresponding serving cell, this means no resource is allocated for PUSCH transmission, and thus, it is not clear which values should be used for $M_{PUSCH}$ and $\Delta_{TF}$. This lack of clarity results in a device enabling the UE and the eNB to calculate and interpret PH using the same $M_{PUSCH}$ and $\Delta_{TF}$.

The enablement of the UE and the eNB to calculate and interpret the PH is achieved with the transmission format (which determines an amount and MCS level of the transmission resource) negotiated between the UE and eNB for the PH calculation when there is no PUSCH transmission. Assuming one Resource Block (RB) and a lowest MCS level as a reference transmission format, both the $M_{PUSCH}$ and $\Delta_{TF}$ become 0 so as to be ignorable in Math Figure 1. Accordingly, when there is no PUSCH transmission in the serving cell, the PH can be defined by Math Figure 5:

MathFigure 5

[Math.5]

$$PH(i) = \min\{P_{EMAX}, P_{PowerClass}\} - \{P_{O\_PUSCH,c}(j) + \alpha_c(j) \cdot PL_c + f_c(i)\}$$

In Math Figure 5, $P_{O\_PUSCH,C}$, $\alpha_c$, $f_c(i)$, and $PL_c$ are values derived from the corresponding serving cells calculating the PH rather than the serving cell in which the PHR is transmitted. The PH calculated according to the above Math Figure is reported to the eNB along with the PHs of other serving cells in the PHR transmitted in the other serving cell. In view of the eNB, it is possible to check a plurality of PHs for the respective serving cells by checking one PHR. However, it is a problem that the eNB cannot check whether the PHs of the respective cells that are included in the PHR are calculated in consideration of the PUSCH transmission or using the PUSCH reference format of the exemplary embodiments herein. Without such knowledge, the eNB cannot interpret the reported PHs, and thus, it is difficult to expect efficient scheduling.

In order to overcome this problem, an indicator in the PHR formation is included. The present exemplary embodiment uses an indicator to indicate whether the PUSCH transmission is considered in the PH calculation reported in the PHR. This indicator is added in association with PHs of activated serving cells. This indicator has a length of 1 bit. If the PH of a certain cell is calculated based on the PUSCH transmission, i.e. using the actual transmission format, the UE sets the bit to a predetermined value (e.g. 0). Otherwise the PH is calculated using the reference format (i.e., a number of RBs = 0 and $\Delta_{TF}$=0) due to no PUSCH transmission in the corresponding cell, and the UE sets the indicating bit to another value (e.g. 1).

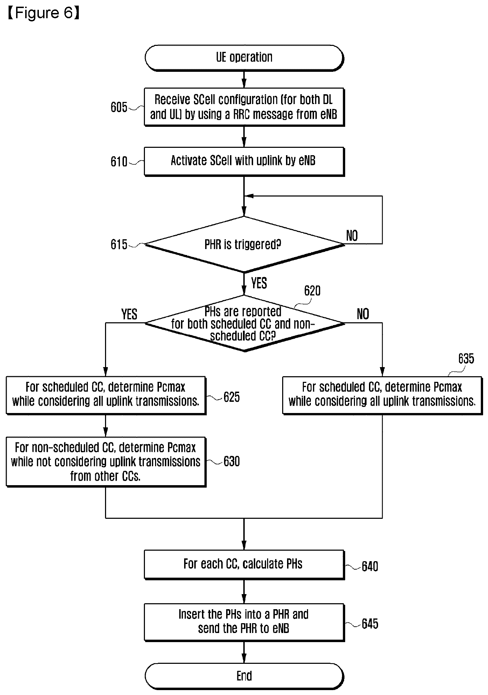

FIG. 6 is a flowchart illustrating a procedure for configuring PH of the UE according to an exemplary embodiment of the present invention.

Referring to FIG. 6, the UE receives the Serving Cell (SCell) configuration information for both the DL and the UL on a plurality of carriers aggregated through an RRC message transmitted by the eNB in step 605. The eNB can configure the downlink carriers and the uplink carriers linked to the respective downlink carriers. Next, the UE activates the SCell by activating the uplink carriers using the MAC CE in order to actually transmit data on the uplink carriers in step 610. Afterward, the UE determines if a PHR is triggered in step 615. The PHR can be triggered periodically or a PHR trigger may be executed for a single time.. If the PHR trigger is detected, the UE determines whether the PHs are reported for both the scheduled CC and the non-scheduled CC in step 620. In other words, the UE determines whether the PHR reports PHs of a plurality of carriers and whether there is a carrier on which no PUSCH is transmitted among the plural carriers.

If it is determined that there is at least one carrier on which no PUSCH is transmitted among the plurality of carriers, then the UE separates the carriers having PUSCH transmission and the carriers having no PUSCH transmission and calculates the UE's maximum transmission power $P_{CMAX,c}$ in steps 625 and 630. Specifically, the UE calculates $P_{CMAX,c}$ for the carriers having PUSCH transmission in consideration of all the uplink transmission in the corresponding TTI in step 625, and the UE calculates $P_{CMAX,c}$ for the carriers having no PUSCH transmission while not considering the uplink transmissions from other CCs in the corresponding TTI (e.g. using Math Figure 5) in step 630. Otherwise, if it is determined that there is no carrier on which PUSCH is transmitted at step 620, the UE calculates $P_{CMAX,c}$ in consideration of all the uplink transmissions on the carriers having the PUSCH transmission in the corresponding TTI in step 635. Afterward, the UE 640 calculates PHs of the respective carriers, or in other words, for each CC, using the $P_{CMAX,c}$ in step 640. Next, the UE inserts the PHs into a PHR and sends the PHR to the eNB in step 645.

As described above, an exemplary embodiment of the present invention enables the UE to report the PHs of a plurality of carriers using an extended PHR in the mobile communication system supporting carrier aggregation. The UE determines the PCMAX,c of individual carriers according to whether the carriers are carrying the PUSCHs. At this time, the UE determines whether each carrier is used to transmit a PUSCH. If a PUSCH is actually transmitted on the CC, the UE determines the $P_{CMAX,c}$ of the CC in consideration of the uplink transmissions of other carriers. If the PUSCH is not transmitted on the CC, the UE determines the $P_{CMAX,c}$ of the CC with Math Figure 5, i.e. using a predetermined value. The UE generates an extended PHR with a plurality of PHs and transmits the extended PHR on one of a plurality of carriers.

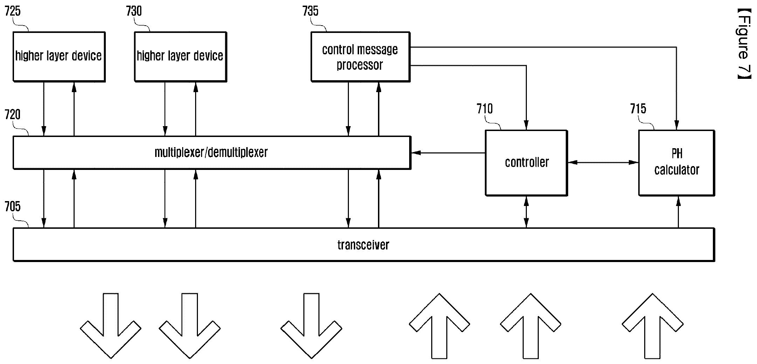

FIG. 7 is a block diagram illustrating a configuration of a PH reporting apparatus of the UE according to an exemplary embodiment of the present invention.

Referring to FIG. 7, the UE includes a transceiver 705, a PH calculator 715, a controller 710, a multiplexer/demultiplexer 720, a control message processor 735, and higher layer devices 725 and 730.

The transceiver 705 receives data and control signals on downlink carriers and transmits data and control signals on uplink carriers. In a case that a plurality of carriers is aggregated, the transceiver 705 can transmit/receive the data and control signals over the plurality of carriers.

The controller 710 controls the multiplexer/demultiplexer 720 so as to generate MAC PDUs according to a control signal received via the transceiver 705. For example, the control signal may be the scheduling information in an uplink grant. The controller detects a PHR trigger. If a PHR trigger is detected, the controller 710 controls the PH calculator 715 to calculate the PH. Whether the PHR is triggered can be determined by checking a PHR parameter provided by the control message processor 735. In a case that the PHs of multiple uplink carriers are reported in a PHR, the controller 710 controls the multiplexer/demultiplexer 720 to place an indicator in the MAC PDU, wherein the indicator indicates whether the PH for each carrier is derived from a real $P_{CMAX}$ or a virtual $P_{CMAX}$.

The controller 710 generates the PHR with the PHs provided by the PH calculator 715 and sends the PHR to the multiplexer/demultiplexer 720. In a case that multiple carriers are aggregated, the controller 710 can report the PHs using an extended PHR configured according to an exemplary embodiment of the present invention. At this time, the controller 710 can configure the PHs of the multiple carriers so as to be included in the extended PHR along with the transmission format indicators corresponding to the PHs. The controller 710 can transmit the extended PHR on one of the multiple carriers.

The PH calculator 715 calculates PH according to the control signal from the controller 710 and sends the PH to the controller 710. In a case that a plurality of carriers is aggregated, the PH calculator 715 can calculate PHs for the respective carriers. That is, the PH calculator 715 calculates the PHs for the carriers in consideration of whether PUSCH transmission takes place on each carrier. If the PUSCH transmission takes place, the PH calculator 715 can calculate the PH according to a normal method. Otherwise, if no PUSCH transmission takes place, the PH calculator 715 can calculate the PH with a predetermined reference format. At this time, the PH calculator 715 derives the PH using a virtual $P_{CMAX}$ for the carrier on which no PUSCH transmission takes place.

The multiplexer/demultiplexer 720 multiplexes the data from the higher layer devices 725 and 730 and/or control message processor 735 and demultiplexes the data received by the transceiver 705 for the higher layer devices 725 and 730 and/or the control message processor 735.

The control message processor 735 processes the control message transmitted by the network and takes any action commanded by the control message. The control message processor 735 forwards the PHR parameter carried in the control message to the controller 710 or forwards the information on the newly activated carriers to the transceiver 705 in order to set the carriers. The higher layer devices 725 and 730 can be implemented for their respective services so as to deliver the data generated by a user service, such as a FTP service and a VoIP service, to the multiplexer/demultiplexer 720. Alternatively, the higher layer devices 725 and 730 may process and deliver the data form the multiplexer/demultiplexer 720 to the service applications of the higher layer.

Once the UE reports the extended PHR, the eNB uses the extended PHR to determine an uplink transmission power. The eNB incudes a transceiver and a controller. The transceiver receives the extended PHR through one of the active carriers. The controller checks the PHs of the carriers according to the extended PHR.

As described above, the method and apparatus for determining a maximum transmission power in a mobile communication system supporting carrier aggregation is advantageous to determine the maximum transmission power per carrier more efficiently. As a consequence, the per-carrier maximum transmission power determination method and apparatus of the present invention is capable of controlling uplink transmission power efficiently in the mobile communication system.

While the invention has been shown and described with reference to certain exemplary embodiments thereof, it will be understood by those skilled in the art that various changes in form and details may be made therein without departing from the scope of the invention as defined by the appended claims.


**Claims**

1. A method of a terminal for reporting a power headroom report, PHR, in a mobile communication system supporting carrier aggregation, the method comprising:

   determining (625) a first maximum transmission power of a first serving cell of one or more serving cells based on uplink transmission of at least one other serving cell, in a case that a physical uplink shared channel, PUSCH, is transmitted on the first serving cell;

determining (630) a second maximum transmission power of the first serving cell of the one or more serving cells without consideration of uplink transmission of the other at least one serving cell, in a case that the PUSCH is not transmitted on the first serving cell;

determining (640) a power headroom, PH, of the first serving cell based on the first maximum transmission power or the second maximum transmission power; and

transmitting (645) an extended PHR including respective determined PHs of the one or more serving cells, wherein the first maximum transmission power of the first serving cell is determined based on a frequency band of the at least one other serving cell in which the uplink transmission is performed,

wherein the PH is determined by subtracting transmission power information associated with the PUSCH from the second maximum transmission power of the serving cell, in the case that the PUSCH is not transmitted on the first serving cell, and

**characterized in that**

the transmission power information corresponds to a reference format based on an assumption that a parameter associated with a number of resource blocks $M_{PUSCH}$ and a parameter associated with a modulation and coding scheme, MCS, $\Delta_{TF}$ become 0.

2. The method of claim 1, wherein the PHR further includes indicators corresponding to the determined PHs, wherein an indicator indicates whether the determined PH has been determined based on the first maximum transmission power or the second maximum transmission power.

3. The method of claim 1, wherein the extended PHR is transmitted on one of the one or more serving cells.

4. The method of claim 1, wherein the respective calculated PHs are arranged in a predetermined order in the extended PHR.

5. A terminal in a mobile communication system supporting carrier aggregation, the terminal comprising:

   a transceiver; and
   a controller (710) coupled with the transceiver and configured to:

      determine a first maximum transmission power of a first serving cell of one or more serving cells based on uplink transmission of at least one other serving cell, in a case that a physical uplink shared channel, PUSCH, is transmitted on the first serving cell,

      determine a second maximum transmission power of the first serving cell of the one or more serving cells without consideration of uplink transmission of the other at least one serving cell, in a case that the PUSCH is not transmitted on the first serving cell,

      determine a power headroom, PH, of the first serving cell based on the first maximum transmission power or the second maximum transmission power, and

      transmit an extended power headroom report, PHR, including respective determined PHs of the one or more serving cells,

   wherein the first maximum transmission power of the first serving cell is determined based on a frequency band of the at least one other serving cell in which the uplink transmission is performed,

   wherein the PH is determined by subtracting transmission power information associated with the PUSCH from the second maximum transmission power of the serving cell, in the case that the PUSCH is not transmitted on the first serving cell, and

   **characterized in that**

   the transmission power information corresponds to a reference format based on an assumption that a parameter associated with a number of resource blocks $M_{PUSCH}$ and a parameter associated with a modulation and coding scheme, MCS, $\Delta_{TF}$ become 0.

6. The terminal of claim 5, wherein the PHR further includes indicators corresponding to the determined PHs, wherein an indicator indicates whether the determined PH has been determined based on the first maximum transmission power or the second maximum transmission power.

7. The terminal of claim 5, wherein the controller is further configured to transmit the extended PHR on one of the one or more serving cells.

**8.** The terminal of claim 5, wherein the respective calculated PHs are arranged in a predetermined order in the extended PHR.

**Patentansprüche**

**1.** Verfahren eines Endgeräts zum Melden eines Berichts über Leistungsreserven (Power Headroom Report, PHR) in einem Mobilkommunikations-System, das Carrier-Aggregation unterstützt, wobei das Verfahren umfasst:

Bestimmen (625) einer ersten maximalen Sendeleistung einer ersten betreuenden Funkzelle von einer oder mehreren betreuenden Funkzelle/n auf der Basis von Uplink-Senden von wenigstens einer anderen betreuenden Funkzelle, in einem Fall, dass ein PUSCH-Kanal (physical uplink shared channel) an der ersten betreuenden Funkzelle gesendet wird;
Bestimmen (630) einer zweiten maximalen Sendeleistung der ersten betreuenden Funkzelle von der einen oder den mehreren betreuenden Funkzelle/n ohne Berücksichtigung von Uplink-Senden der wenigstens einen anderen betreuenden Funkzelle, in einem Fall, dass der PUSCH-Kanal nicht an der ersten betreuenden Funkzelle gesendet wird;
Bestimmen (640) einer Leistungsreserve, PH, der ersten betreuenden Funkzelle auf Basis der ersten maximalen Sendeleistung oder der zweiten maximalen Sendeleistung; und
Senden (645) eines erweiterten PHR, der entsprechende bestimmte PHs der einen oder der mehreren betreuenden Funkzelle/n einschließt,
wobei die erste maximale Sendeleistung der ersten betreuenden Funkzelle auf der Grundlage eines Frequenzbandes der wenigstens einen anderen betreuenden Funkzelle, an der das Uplink-Senden durchgeführt wird, bestimmt wird,
wobei die PH durch Subtraktion von mit dem PUSCH-Kanal verbundenen Sendeleistungsinformationen von der zweiten maximalen Sendeleistung der betreuenden Funkzelle bestimmt wird, in dem Fall, dass der PUSCH-Kanal nicht an der ersten betreuenden Funkzelle gesendet wird, und
**dadurch gekennzeichnet, dass**
die Sendeleistungsinformationen einem Referenzformat entsprichen, das auf einer Annahme beruht, dass ein Parameter $M_{PUSCH}$, der mit einer Anzahl von Ressourcen-Blöcken verbunden ist, und ein Parameter $\Delta TF$, der mit einem Modulations- und Kodierungsschema, MCS, verbunden ist, 0 werden.

**2.** Verfahren nach Anspruch 1, wobei der PHR femer Indikatoren enthält, die den bestimmten PHs entsprechen, wobei ein Indikator anzeigt, ob die bestimmte PH auf Basis der ersten maximalen Sendeleistung oder der zweiten maximalen Sendeleistung bestimmt wurde.

**3.** Verfahren nach Anspruch 1, wobei der erweiterte PHR an einer der einen oder mehreren betreuenden Funkzelle/n gesendet wird.

**4.** Verfahren nach Anspruch 1, wobei die jeweiligen berechneten PHs in einer vorbestimmten Reihenfolge in dem erweiterten PHR angeordnet sind.

**5.** Endgerät in einem Mobilkommunikations-System, das Carrier-Aggregation unterstützt, wobei das Endgerät umfasst:

eine Sende-/Empfangseinrichtung; und
eine Steuerungseinrichtung (710), die mit der Sende-/Empfangseinrichtung gekoppelt und dafür konfiguriert ist:

eine erste maximale Sendeleistung einer ersten betreuenden Funkzelle von einer oder mehreren betreuenden Funkzelle/n auf Basis von Uplink-Senden wenigstens einer anderen betreuenden Funkzelle zu bestimmen, in einem Fall, dass ein PUSCH-Kanal (physical uplink shared channel) an der ersten betreuenden Funkzelle gesendet wird,
eine zweite maximale Sendeleistung der ersten betreuenden Funkzelle von der einen oder den mehreren betreuenden Funkzellen ohne Berücksichtigung von Uplink-Senden der wenigstens einen anderen betreuenden Funkzelle zu bestimmen, in einem Fall, dass der PUSCH-Kanal nicht an der ersten betreuenden Funkzelle gesendet wird,
eine Leistungsreserve, PH, der ersten betreuenden Funkzelle auf Basis der ersten maximalen Sendeleistung oder der zweiten maximalen Sendeleistung zu bestimmen, und einen erweiterten Bericht über die Leistungsreserve (Power Headroom Report, PHR) zu senden, der entsprechende bestimmte PHs von der einen oder den mehreren betreuenden Funkzelle/n einschließt,

wobei die erste maximale Sendeleistung der ersten betreuenden Funkzelle auf der Grundlage eines Frequenzbandes der wenigstens einen anderen betreuenden Funkzelle, an der das Uplink-Senden durchgeführt wird, bestimmt wird,
wobei die PH durch Subtraktion von mit dem PUSCH-Kanal verbundenen Sendeleistungsinformationen von der zweiten maximalen Sendeleistung der betreuenden Funkzelle bestimmt wird, in dem Fall, dass der PUSCH-Kanal nicht an der ersten betreuenden Funkzelle gesendet wird, und
**dadurch gekennzeichnet, dass**
die Sendeleistungsinformationen einem Referenzformat entsprichen, das auf der Annahme beruht, dass ein Parameter $M_{PUSCH}$, der mit einer Anzahl von Ressourcen-Blöcken verbunden ist, und ein Parameter $\Delta TF$, der mit einem Modulations- und Kodierungsschema, MCS, verbunden ist, 0 werden.

6. Endgerät nach Anspruch 5, wobei der PHR ferner Indikatoren enthält, die den bestimmten PHs entsprechen, wobei ein Indikator anzeigt, ob die bestimmte PH auf der Grundlage der ersten maximalen Sendeleistung oder der zweiten maximalen Sendeleistung bestimmt wurde.

7. Endgerät nach Anspruch 5, wobei die Steuerungseinrichtung ferner so konfiguriert ist, dass sie den erweiterten PHR an einer der einen oder den mehreren betreuenden Funkzelle/n sendet.

8. Endgerät nach Anspruch 5, wobei die jeweiligen berechneten PHs in einer vorbestimmten Reihenfolge in dem erweiterten PHR angeordnet sind.

**Revendications**

1. Procédé pour qu'un terminal rende compte d'un rapport de marge de puissance, PHR, dans un système de communication mobile prenant en charge l'agrégation de porteuses, le procédé comprenant :

la détermination (625) d'une première puissance maximale d'émission d'une première cellule de desserte parmi une ou plusieurs cellules de desserte sur la base d'une transmission de liaison montante d'au moins une autre cellule de desserte, dans le cas où un canal physique partagé de liaison montante, PUSCH, est transmis sur la première cellule de desserte,
la détermination (630) d'une seconde puissance maximale d'émission de la première cellule de desserte parmi la ou les cellules de desserte sans considération d'une transmission de liaison montante de la ou des autres cellules de desserte, dans le cas où aucun canal PUSCH n'est transmis sur la première cellule de desserte,
la détermination (640) de la marge de puissance, PH, de la première cellule de desserte sur la base de la première puissance maximale d'émission ou de la seconde puissance maximale d'émission, et
la transmission (645) d'un rapport PHR étendu incluant les marges PH respectives déterminées de la ou des cellules de desserte,
dans lequel la première puissance maximale d'émission de la première cellule de desserte est déterminée sur la base de la bande de fréquences de la ou des autres cellules de desserte dans lesquelles est effectuée la transmission de liaison montante,
dans lequel la marge PH est déterminée en soustrayant les informations concernant la puissance d'émission associées au canal PUSCH de la seconde puissance maximale d'émission de la cellule de desserte dans le cas où aucun canal PUSCH n'est transmis sur la première cellule de desserte, et
**caractérisé en ce que** :
les informations sur la puissance d'émission correspondent à un format de référence fondé sur la supposition de ce qu'un paramètre associé à un certain nombre de blocs de ressources $M_{PUSCH}$ et qu'un paramètre $\Delta TF$ associé à un principe de modulation et de codage, MCS, deviennent nuls.

2. Procédé selon la revendication 1, dans lequel le rapport PHR inclut en outre des indicateurs correspondant aux marges PH déterminées, un indicateur montrant si la marge PH déterminée a été définie sur la base de la première puissance maximale d'émission ou de la seconde puissance maximale d'émission.

3. Procédé selon la revendication 1, dans lequel le rapport PHR étendu est transmis sur l'une de la ou des cellules de desserte.

4. Procédé selon la revendication 1, dans lequel les marges PH calculées respectives sont agencées selon un ordre prédéterminé dans le rapport PHR étendu.

5. Terminal dans un système de communication mobile prenante en charge l'agrégation de porteuses, le terminal comprenant :

un émetteur récepteur, et
un contrôleur (710) couplé à l'émetteur récepteur et configuré pour :

déterminer une première puissance maximale d'émission d'une première cellule de desserte parmi une ou plusieurs cellules de desserte sur la base d'une transmission de liaison montante d'au moins une autre cellule de desserte, dans le cas où un canal physique partagé de liaison montante, PUSCH, est transmis sur la première cellule de desserte,
déterminer une seconde puissance maximale d'émission de la première cellule de desserte parmi la ou les cellules de desserte sans considération d'une transmission de liaison montante de la ou des autres cellules de desserte, dans le cas où aucun canal PUSCH n'est transmis sur la première cellule de desserte,
déterminer la marge de puissance, PH, de la première cellule de desserte sur la base de la première puissance maximale d'émission ou de la seconde puissance maximale d'émission, et
transmettre un rapport PHR étendu incluant les marges PH respectives déterminées de la ou des cellules de desserte,

dans lequel la première puissance maximale d'émission de la première cellule de desserte est déterminée sur la base de la bande de fréquences de la ou des autres cellules de desserte dans lesquelles est effectuée la transmission de liaison montante,
dans lequel la marge PH est déterminée en soustrayant les informations concernant la puissance d'émission associées au canal PUSCH de la seconde puissance maximale d'émission de la cellule de desserte dans le cas où aucun canal PUSCH n'est transmis sur la première cellule de desserte, et
**caractérisé en ce que** :
les informations sur la puissance d'émission correspondent à un format de référence fondé sur la supposition de ce qu'un paramètre associé à un certain nombre de blocs de ressources $M_{PUSCH}$ et qu'un paramètre $\Delta TF$ associé à un principe de modulation et de codage, MCS, deviennent nuls.

6. Terminal selon la revendication 5, dans lequel le rapport PHR inclut en outre des indicateurs correspondant aux marges PH déterminées, un indicateur montrant si la marge PH déterminée a été définie sur la base de la première puissance maximale d'émission ou de la seconde puissance maximale d'émission.

7. Terminal selon la revendication 5, dans lequel le contrôleur est en outre configuré pour transmettre le rapport PHR étendu sur l'une de la ou des cellules de desserte.

8. Terminal selon la revendication 5, dans lequel les marges PH calculées respectives sont agencées selon un ordre prédéterminé dans le rapport PHR étendu.

【Figure 1】

【Figure 2】

【Figure 3】

【Figure 4】

【Figure 5】

【Figure 6】

```
           ┌─────────────────────────────┐
           │        UE operation         │
           └─────────────────────────────┘
                         │
                         ▼
           ┌─────────────────────────────┐
      605  │ Receive SCell configuration (for both DL │
           │ and UL) by using a RRC message from eNB │
           └─────────────────────────────┘
                         │
                         ▼
           ┌─────────────────────────────┐
      610  │  Activate SCell with uplink by eNB │
           └─────────────────────────────┘
                         │
                         ▼ ◄──────────────────┐
                    ╱─────────╲           NO  │
      615        ╱ PHR is triggered? ╲────────┘
                    ╲─────────╱
                         │ YES
                         ▼        620
                  ╱──────────────╲
         YES    ╱ PHs are reported  ╲  NO
        ◄──────╱ for both scheduled CC and non- ╲──────►
                ╲   scheduled CC?   ╱
                  ╲──────────────╱
         │                                      │
         ▼                                      ▼                635
┌─────────────────────────┐          ┌─────────────────────────┐
│ For scheduled CC, determine Pcmax │  │ For scheduled CC, determine Pcmax │
│ while considering all uplink transmissions. │625│ while considering all uplink transmissions. │
└─────────────────────────┘          └─────────────────────────┘
         │                                      │
         ▼                                      │
┌─────────────────────────┐                     │
│ For non-scheduled CC, determine Pcmax │       │
│ while not considering uplink transmissions │630│
│ from other CCs. │                             │
└─────────────────────────┘                     │
         │                                      │
         └──────────────┬───────────────────────┘
                        ▼
           ┌─────────────────────────────┐
           │  For each CC, calculate PHs  │─640
           └─────────────────────────────┘
                        │
                        ▼
           ┌─────────────────────────────┐
           │   Insert the PHs into a PHR and │─645
           │      send the PHR to eNB     │
           └─────────────────────────────┘
                        │
                        ▼
           ┌─────────────────────────────┐
           │            End              │
           └─────────────────────────────┘
```

【Figure 7】

**REFERENCES CITED IN THE DESCRIPTION**

**Non-patent literature cited in the description**

- **NOKIA SIEMENS NETWORKS, NOKIA CORPORATION.** Further consideration on virtual PHR. *R2-104394,3GPP TSG-RAN WG2 Meeting #71,* 2010